# EUROPEAN PATENT APPLICATION

(11) **EP 1 394 705 A1**
(43) Date of publication of application: **03.03.2004**
(21) Application number: 02019174.8
(22) Date of filing: 02.09.2002
(51) Int. Cl.: G06F 17/60

(54) **A batch type billing method and system using dispersed processing**

(71) Applicant: KTFreetel Co., Ltd, 135-280 Seoul (KR)
(72) Inventor: Kim, Yeon-Kil, Gangnam-gu, 135-280 Seoul (KR); Kim, Chan-Kyum, Nowon-gu, 139-241 Seoul (KR); Kim, Hyung-Yong, 135-280 Seoul (KR)
(74) Representative: Rickard, David John

(57) **Abstract**

The present invention relates to a batch typed billing method and system by using dispersed processing. one aspect of the present invention is a method for batch typed billing in an on-line system and a billing system which have at least one database jointly, wherein the on-line system for operating custom management and the billing system for billing charges are designed for dispersed processing their own task, comprising of the steps of converting a first database which the on-line system and the billing system have jointly, into the state after that time of submitting the current month bill; copying a second database from the converted first database; performing billing by using the second database on the basis of a billing account; and synchronizing the second database with the first database.

## Description

### Technical Field

The present invention relates to a batch typed billing method and system using dispersed processing .

### Background Art

Billing systems are used for submitting bills for charging usage fees. The billing system calculates the charged amount of money that users should pay for each predetermined period by adjusting the usage fees. Bills for public charges such as power, water, and telephone rates, bills for allotments, bills for mobile communication usage, and bills for credit card usage are generally submitted using such a billing system.

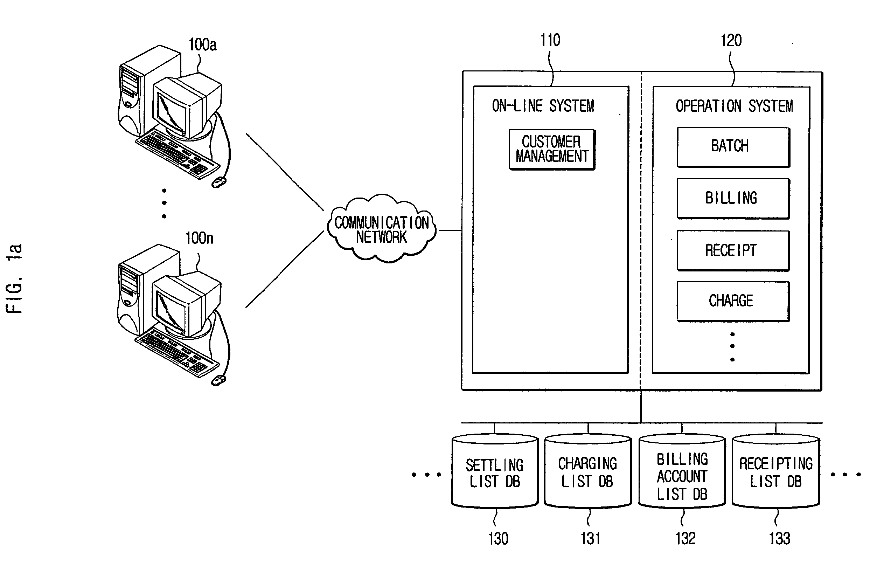

Fig. 1a is a block diagram illustrating a conventional on-line/billing combination system that conjoins system resources with on-line systems.

In Fig. 1a there is shown a prior art on-line/billing combination system comprising a plurality of on-line terminals 100a,...100n (hereinafter100), on-line system 110, and a plurality of databases 130.

The on-line system 110 is coupled with on-line terminals 100 of related agents or related branches. The on-line system 110 alters customer's information in conjunction with operation system 120 by storing the customer's information inputted from the on-line terminals 100 in the plurality of databases 130 co-owned with the operation system 120.

The operation system 120 has the plurality of databases 130 with the on-line system 110. This system processes batch transactions, billing transactions, receipting transactions and charging transactions.

The plurality of databases 130 store necessary data for customer management transactions, batch transactions, billing transactions, receipting transactions, or charging transactions and may be a general Relational Database. The Relational Database is an assembling object of data factors comprised of standard tables. The data is easily accessed and assembled with no change of the database's tables.

The reason for the conventional on-line/billing combination system is based on the database. Through this database, synchronous control and data consensus by the on-line and billing systems is maintained. By this configuration, file data consensus can be maintained in spite of system failure and the addition or alteration of attributes can occur easily compared to file-based systems, although the process is not fast.

Because the conventional on-line/billing combination system co-owns a plurality of the databases, it is (1) not necessary to copy data because the system can access on-line billing information directly and (2) bills are submitted by using the altered customer's information, such as an altered address.

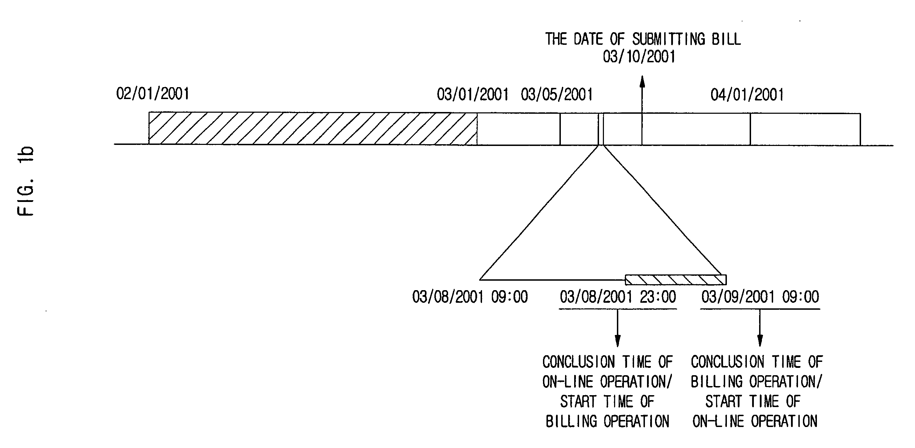

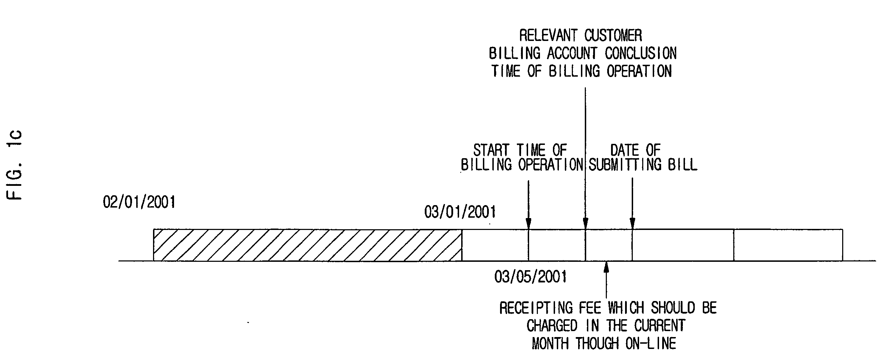

However, this configuration induces poor system performance due to (1) a bottleneck effect at the time of accessing the database and (2) the load when billing. The billing system, especially in the case of (2), can only process limited billing transactions because the on-line system has limited access to databases. A detailed description of this will follow, referring to Fig. 1b.

Fig. 1b illustrates the billing process per month on the conventional on-line/billing combination system.

As shown in Fig. 1b, the conventional on-line/billing combination system processes billing transactions from for example March 5, 2001 to March 10, 2001, for charged fees during the period of February 1, 2001 to February 28, 2001. All bills submitted by March 10, 2001 are made during this term.

For describing the conventional on-line/billing combination system's disadvantages, the date of March 8 will be used.

Because the billing process using the on-line/billing combination system should use most parts of the system resources co-owned with the on-line system, it is considerably loaded and may even become overloaded. Accordingly, when the billing process is operated by the system using resources co-owned with the on-line system, the system's performance is significantly reduced due to the bottleneck effect. In order to avoid this problem, access to the databases by the on-line system may be restricted and the billing system may be given exclusive access to the system resources during a predetermined period of time. Typically the on-line terminal is restricted by allowing access to the on-line system only after a predetermined time (hereinafter called the deadline), for example 11p.m and before another predetermined time, for example 9am. Accordingly, in our example the billing system operates billing transactions by having exclusive access to the system resources from 11p.m. to 9a.m. on March 9, 2001.

This can be an effective method but restricts the number of bills that can be processed because it can only operate during the predetermined time period if overloading of the on-line/billing combination system is to be prevented and if it is to be stopped from getting out of order. Thus the number of bills able to undergo transactions is limited even though the billing system has exclusive use of the system resources. Accordingly, when the number of bills is increased some will not be able to be processed during the predetermined period. In order to overcome this problem, the system resources need to be upgraded or a new system is needed. However, both of these options are very expensive.

Another solution to overcome this problem may be to divide the on-line system and the billing system to process billing transactions. If the on-line system and the billing system were divided, the performance of the billing system would improve. Accordingly, the bottleneck phenomenon and the lowering of the system's performance would be overcome. However, the effectiveness of combining the on-line system and the billing system would inevitably be lost. Accordingly, the system's operator would need to decide whether to integrate or divide the on-line system and the billing system.

Further, when the billing transaction is processed during a predetermined time in order to prevent the on-line/billing combination system from getting out of order, a problem will occur if a customer pays after the conclusion of or during the billing process.

Fig. 1c illustrates the receipt obtained from month fee process using the on-line terminal utilizing the existing prior art on-line billing combination system.

As shown in Fig. 1c, the billing transaction for customer A is terminated on March 8 during the billing process period for February, 2001. However, customer A pays a fee that should be reflected in February's bills if errors are made in January 2001 and if the bill is not submitted by March 9. In this case, the conventional on-line /billing combination system should process the billing transaction for only customer A's related data, for the fee to be reflected in February's bill.

### Disclosure of the Invention

The present invention aims to address the above disadvantages of the conventional on-line/billing combination system. Therefore, it is an objective of the present invention to provide a batch type billing method and system using dispersed processing.

It is another objective of the present invention to provide a batch type billing method and system using dispersed processing to address the disadvantages of dividing operation and integrating operation of the on-line system and billing system.

According to one aspect of the present invention there is provided a method for batch type billing in an on-line system and a billing system which has at least one jointly accessable database, wherein the on-line system for operating custom management and the billing system for billing charges are designed for dispersedly processing their own tasks, comprising the steps of converting the first database, which the on-line system and the billing system have joint access to, into the state after the time of submitting the current month bill; copying a second database from the converted first database; performing billing by using the second database on the basis of a billing account; and synchronizing the second database with the first database.

Further, the step of converting preferably increases the consecutive numbers of the bill in the first database by a predetermined value in order that the alteration factors that occurred after the beginning of the billing are reflected on the next month's bill. Also, the step of synchronizing preferably comprises the steps of dividing the billing accounts into the number of simultaneously possible synchronizations, in correspondence with the number of billing accounts, which completes their billing process, determining whether or not any alteration occurred in the first database during the period of performing billing by comparing the first database with the second database on the basis of at least one billing account simultaneously and transmitting the data in the second database to the first database corresponding with the determined result. Preferably, the first database comprises at least one billing related database. Preferably, the second database comprises at least one database accessed by only the billing system. Preferably, the billing account comprises identification numbers granted for at least one customer.

According to another aspect of the present invention there is provided a batch type billing system having an on-line system and a billing system which has at least one jointly accessible database, comprising billing conclusion means for converting a first database which the on-line system and the billing system have joint access to, into the state after that time of submitting the current month bill, copying means for transmitting data stored in the first database to a second database, billing means for performing billing by using the second database as the basis of a billing account, and at least one synchronizing means for synchronizing the second database with the first database.

Preferably, the billing conclusion means increases the consecutive number of the bill in the first database by a predetermined value in order that alteration factors occuring after the time of starting the billing is reflected on the next month's bill. Also, at least one synchronizing means preferably comprises, means for dividing the billing accounts into the number of simultaneously possible synchronizations, in correspondence with the number of billing accounts which completes their billing process, means for determining whether or not any alteration occurred in the first database during the period of performing billing by comparing the first database with the second database on the basis of at least one billing account simultaneously and means for transmitting the data in the second database to the first database corresponding with the determined result. Also, the first database preferably comprises at least one billing related database. Also, the second database preferably comprises at least one database accessed by only the billing system. Also, the billing account preferably grants an identification number for at least one customer.

### Brief Description of the Drawings

The objectives and advantages of the present invention will become more apparent from the following detailed descriptions of preferred embodiments of the present invention with reference to the attached drawings, in which:
Fig. 1a is a block diagram illustrating a conventional on-line/billing combination system that has system resources jointly with the on-line system;
Fig. 1b illustrates the billing process for every one month on the conventional on-line/billing combination system having the system resources with the on-line system;
Fig. 1c illustrates the receipting of the current month fee process from the on-line terminal after the billing process in the conventional on-line/billing combination system having system resources with the on-line system;
Figs. 2a, 2b and 2c are schematic block diagrams illustrating data processing on a batch type billing system using dispersed processing according to one preferred embodiment of the present invention;
Fig. 3 is a schematic flowchart illustrating data processing by a batch type billing method using dispersed processing according to one preferred embodiment of the present invention;
Fig. 4a is an illustration describing the operation of a billing conclusion process in the on-line system;
Fig. 4b is a flow chart illustrating the procedure of an on-line system by the billing conclusion process;
Fig. 4c is a block diagram illustrating a billing account database
Fig. 4d is an illustration describing an alteration procedure of the consecutive numbers of the bill by a billing conclusion process;
Fig. 5a is an illustration describing copying of databases from an on-line/billing system co-ownership database to the billing system's database;
Fig. 5b is an illustration describing a configuration of a settling list database;
Fig. 5c is an illustration describing a configuration of a charging list database;
Fig. 5d is an illustration describing a configuration of a receipting list database;
Fig. 6a is an illustration describing a billing operation using an on-line/billing system co-ownership database terminated with billing;
Fig. 6b is a block diagram illustrating a billing conclusion customer database;
Fig. 7a is an illustration describing a process of transmitting information of customers or the billing accounts completed with billing to an on-line/billing system co-ownership database;
Fig. 7b is an illustration describing alteration in an on-line/billing system co-ownership database after operation billing conclusion and before completion of billing; and
Fig. 7c is an illustration describing synchronization between a copied on-line/billing system co-ownership database and an on-line/billing system co-ownership database.

### Modes for carrying out the Invention

Preferred embodiments of the present invention will now be described in more detail with reference to the accompanying drawings, but it is to be understood that the present invention is not limited to the following embodiments.

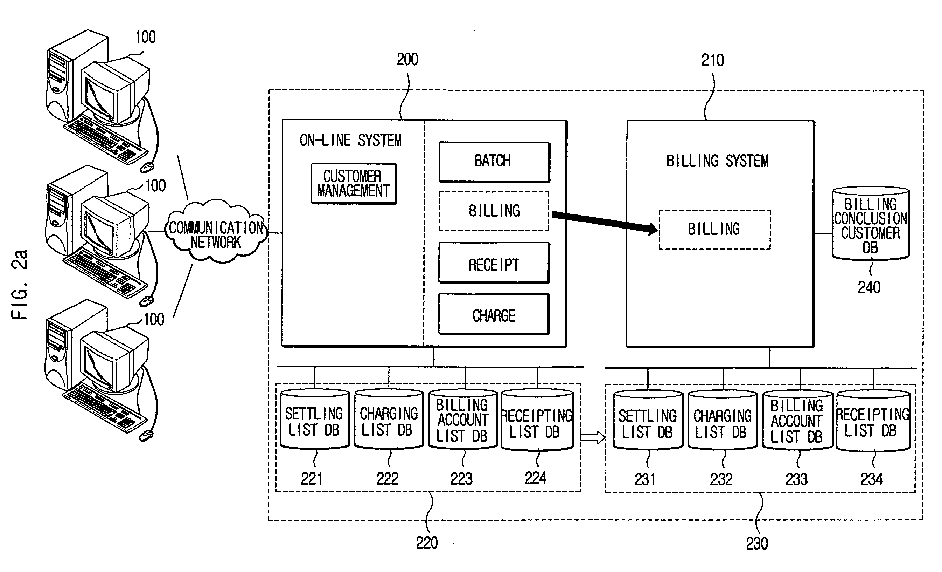

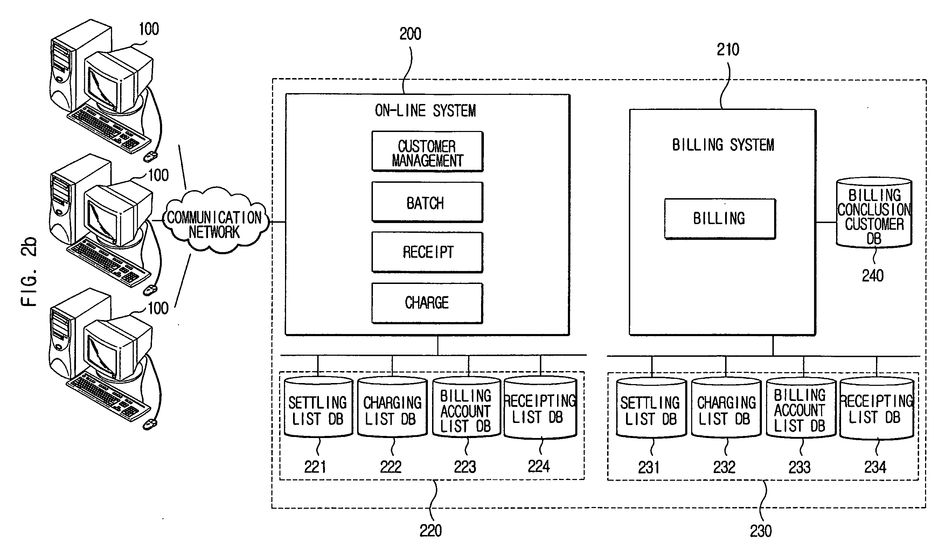

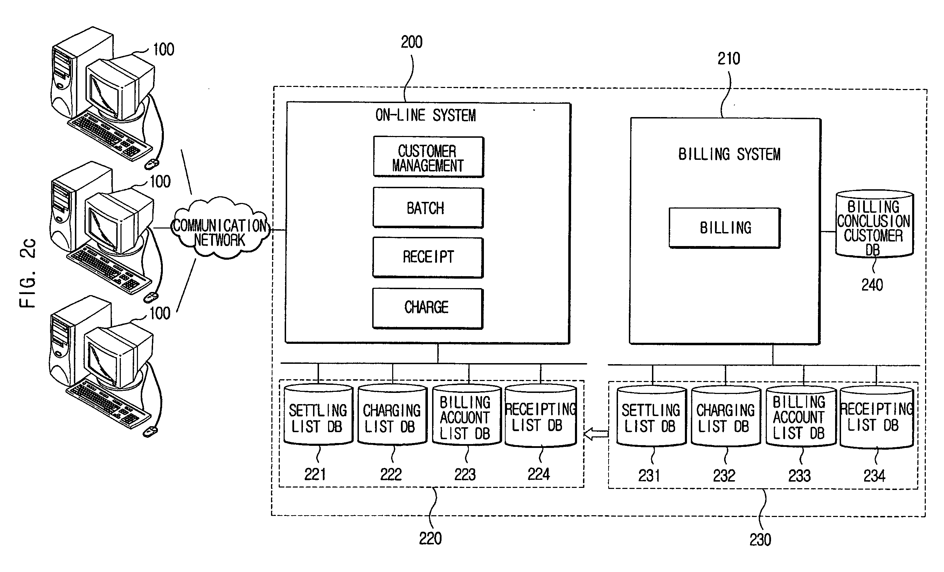

Figs. 2a, 2b and 2c are schematic block diagrams illustrating data processing on a batch type billing system using dispersed processing in accordance with one preferred embodiment of the present invention.

In Figs. 2a, 2b and 2c, a batch type billing system according to one embodiment of the present invention comprises on-line system 200, billing system 210, on-line/billing system co-ownership database 220, copied on-line/billing system co-ownership database 230 and billing system's exclusive database 240.

On-line system 200 operates all processes for accepting a billing process in the existing on-line/billing combination system. The on-line system 200 may be a UNIX machine or mainframe or any other suitable system. On-line system 200 stores altered customer information, receipting information, or similar information transmitted from on-line terminals 100 in on-line/billing system co-ownership database 220, regardless of whether or not billing system 210 starts creating bills.

Also, on-line system 200 may further comprise existing processed bills for generating a requested fee list when customers request a fee list covering a previous period of time or when queries on existing bills are received. These historic lists and information may be generated on-line or off-line by on-line system 200. In this case, billing system 210 may be used to operate the billing to adjust the amount of money charged to customers using bills and the existing processed billing, which provides an on-line and/or off-line fee list inquiry service for customers.

Billing system 210 may comprise a UNIX machine, mainframe or any other suitable system, which preferably is the same grade or lower grade as on-line system 200. Billing system 210 preferably only operates billing for submitting bills. Preferably, an assistance or backup system is provided and used to carry out the operating tasks of the billing system during such times when the main system is not functioning effectively.

On-line/billing system co-ownership database 220 stores data for customer managing tasks, arranging tasks, billing tasks, receipting tasks, charging tasks and similar tasks. On-line/billing system co-ownership database 220 may be a general Relational Database or other suitable database. On-line/billing system co-ownership database 220 comprises settling list database 221, charging list database 222, billing account database 223 and receipting list database 224.

Copied on-line/billing system co-ownership database 230 is copied from on-line/billing system co-ownership database 220. Preferably the copying occurs just before the billing system 220 starts to operate billing. Copied on-line/billing system co-ownership database 230 may be accessed by billing system 210 and at times will not be identical to the on-line/billing system co-ownership database 220 altered by the on-line system 200 during billing operations. Namely, altered factors in the on-line/billing system co-ownership database 220, preferably should not be reflected to the copied on-line/billing system co-ownership database 230 until the billing operation for arbitrary customers or billing accounts is terminated.

The billing account may grant identical numbers for one customer or a plurality of customers, and may be a unique identifier for identifying a charging target. All of the billing related databases preferably comprise a billing account field. Examples of when a plurality of customers is granted one billing account include when a company pays for all its staff's business mobile communication fees, or when a family pays for all of the family's mobile communication fees together.

The billing system's exclusive database 240 is only used for billing operations by billing system 210. Billing system's exclusive database 240 preferably stores customer's lists and/or billing account lists when the billing operation is terminated.

One embodiment of the present invention will now be described in detail with reference to the block diagrams in Figs. 2a, 2b and 2c.

As shown in Fig. 2a, when the date for billing operation arrives for to prepare and submit bills, billing system 210 starts the billing operation and copies on-line/billing system co-ownership database 220 for the billing operation.

As shown in Fig. 2b, billing system 210 adjusts the amount to be charged or fee by customer or billing account, by using the copied on-line/billing system co-ownership database 230. Billing system 210 stores customer information and/or billing accounts completed by the billing operation in the billing system's exclusive database 240.

As shown in Fig. 2c, billing system 210 retrieves the customer information and/or billing accounts completed by the billing operation from the billing system's exclusive database 240, and copies billing data related to the customer information and/or the billing account in on-line/billing system co-ownership database 220 from the copied on-line/billing system co-ownership database 230.

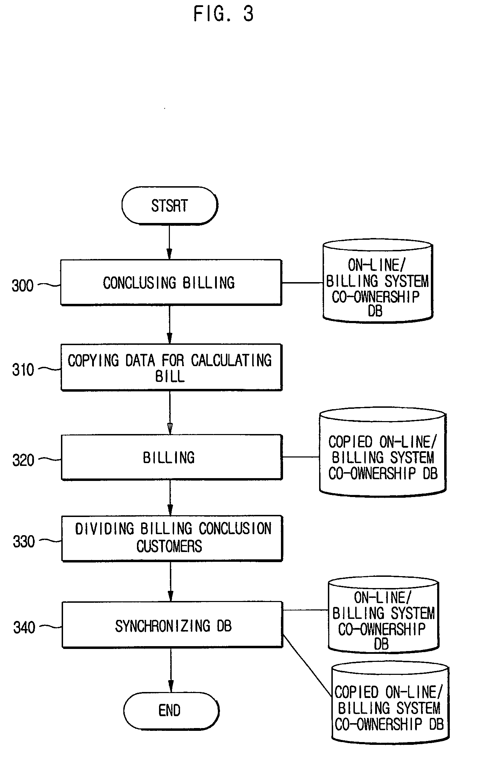

Fig. 3 is a schematic flowchart illustrating data processing by a batch type billing method using dispersed processing according to one preferred embodiment of the present invention.

In Fig. 3, billing conclusion process 201 closes processing of the on-line/billing co-ownership database 220 (Step 300). By the billing conclusion process 201, on-line system 200 alters factors of the bill including alteration of customer information, and receipting activities during the billing operation, to be reflected in the next months bill and stores them in on-line/billing system co-ownership database 220.

At step 310, copying process 202 copies the database of billing system 210 from on-line/billing system co-ownership database 220 processed by the billing conclusion process 201.

At step 320, billing process 203 operates billing by customers or billing accounts by using the copied on-line/billing system co-ownership database 230. Billing process 203 stores the customer list or the billing account list completed with billing operation in the billing conclusion customer database 240. Billing conclusion customer database 240 may be the billing system's exclusive database illustrated in Fig. 2a, 2b and 2c.

At step 330, dividing process 204 retrieves the customers information and/or the billing accounts completed by the billing operation from billing conclusion customer database 240, and calculates the number of the customers or the billing accounts, for transmitting the billing data to on-line/billing system co-ownership database 220. Dividing process 204 calls the database synchronizing processes 205 on the basis of the calculated numbers. Dividing process 204 divides the customer list or the billing account list for transmitting the billing data to the on-line/billing system co-ownership database 220 into the called database synchronizing process 205.

At step 340, database synchronizing process 205 transmits the customer's billing data or the billing account's billing data from the copied on-line/billing system co-ownership database 230 to on-line/billing system co-ownership database 220, by referring to the customer list or the billing account list divided by the dividing process 204. When the on-line/billing system co-ownership database 220 is not the same as the copied on-line/billing system co-ownership database 230 due to alterations of customer's information or receipting activity after the billing conclusion time, the database synchronizing process 205 reads the related billing data from billing system 210. Also, the database synchronizing process 205 alters the state of operating of the customer or the billing account in the billing conclusion customer database 240.

A batch type billing method using dispersed processing in accordance with one preferred embodiment of the present invention will now be described in detail steps.

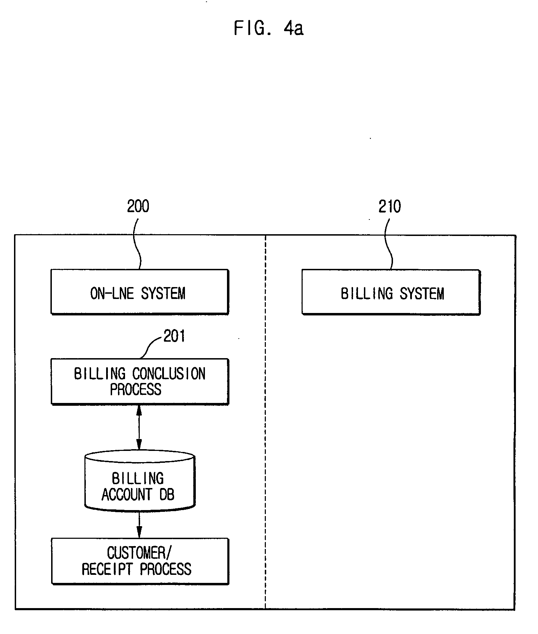

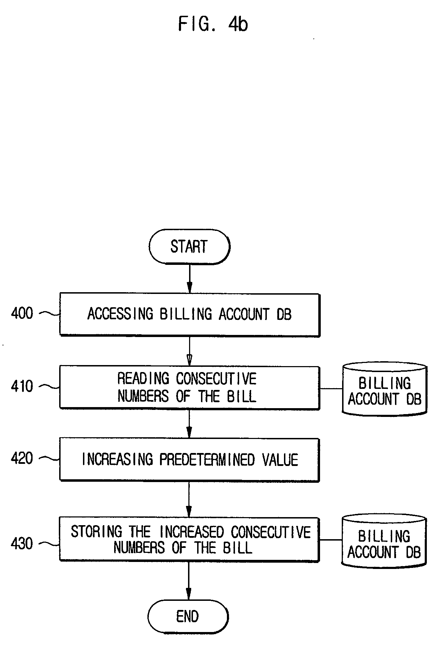

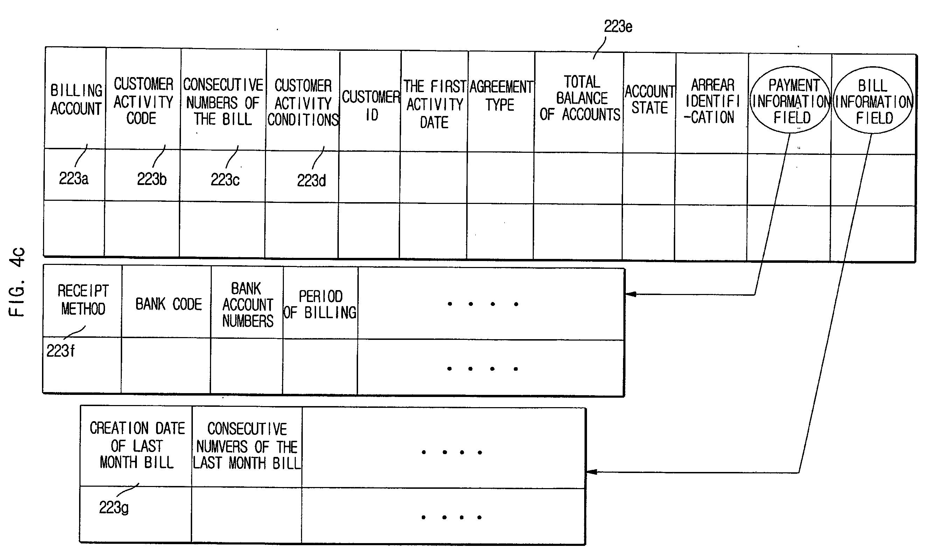

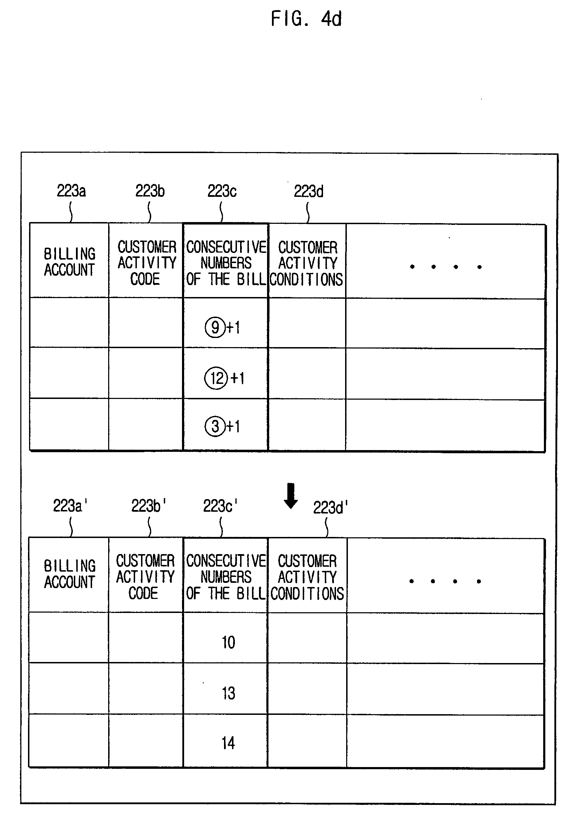

Fig. 4a is an illustration describing the operation of a billing conclusion process in an on-line system. Fig. 4b is a flow chart illustrating the procedure of an on-line system by the billing conclusion process. Fig. 4c is a block diagram illustrating the billing account database. Fig. 4d is an illustration describing the alteration procedure of the consecutive numbers of the bill by the billing conclusion process.

In Fig. 4a, billing conclusion process 201 is operated in on-line system 200 and is terminated after that time of billing conclusion operation for billing account database 223. When billing account database 223 is closed to billing, on-line system 200 alters the customer's information or receipting activity inputted from customer/receipt process during the period of billing operation, to be reflected on the month's bill.

The ordinary billing related database comprises consecutive numbers of the bills submitted by predetermined period (for example, by 1 month). Because the consecutive bill numbers are settled at the time of initial submission of the bills and are increased by predetermined value by every submission of the bills, the number of bills submitted to the customers may be recognized.

In accordance with one preferred embodiment of the present invention, on-line system 200 determines that the alteration of the customer information and the receipting activity are able to be reflected in the correct months bill, by referring to the consecutive numbers of the bill stored in the billing account database 223. Namely, on-line system 200 determines that the correct bill is submitted for the last month's use by referring to the consecutive numbers of the bill. When the correct month's bill is not submitted, on-lime system 200 includes the last month's use into the correct month's bill. When the correct month's bill has been submitted, on-line system 200 carries the last month's use forward to the next month's bill.

Accordingly, the billing conclusion process 201 increases the consecutive numbers of the bill in the billing related database by a predetermined value, when the date of billing operation is reached for preparing and submitting bills. On-line system 200 alters all of the factors including alteration of customer information and receipting activities, reflected to the next month bill. Namely, the on-line system 200 carries forward the current month's part or the next month's part.

In Fig. 4b, at step 400, billing conclusion process 201 accesses the billing related database. In accordance with another preferred embodiment of the present invention, all the consecutive numbers of all the bills may be altered.

At step 410, billing conclusion process 201 increases the consecutive numbers by the customers or the billing accounts according to a predetermined value. As shown in Fig. 4d, the numbers 9, 12, 3 are stored in the consecutive numbers of the bill fields 223c. Namely, each of the consecutive numbers of the bill of the current month by each billing account is 9, 12, and 3. Consecutive numbers of the bill filed 223c' can be increased. As shown each of the consecutive numbers is increased by a predetermined value ('1').

At step 430, billing conclusion process 201 stores the increased consecutive numbers of the bill in the billing account database 223.

In Fig. 4c, billing account database 223 comprises a billing account field, a customer activity code field, a consecutive numbers of the bill field, a customer ID field, a first activity date field, an agreement type field, a total balance of amounts field, an account state field, an arrear identification field, a payment information field and a bill information field. Some of the fields illustrated in Fig. 4c will be now be described.

Billing account field 223a is a billing account field related to the current month bill. Billing account field 223a is a primary key field and has unique value among a plurality of billing related databases.

Customer activity code field 223b is a field rated to the customer management activity code that effects the state alteration of the current billing account. A basic value is allocated to the billing account when the billing account is created. Also, the billing account is renewed at the time of alteration of its state. The state of billing account comprises a current use customer, termination/cancellation of termination, integration of claimants, alteration of claimants, and use stoppage/cancellation of use stoppage.

Consecutive numbers of the bill field 223c is a field related to the consecutive numbers of the bill submitted.

Customer activity conditions field 223d is a field related to a customer activity conditions. The customer activity conditions comprises changes in occupation, sales promotion, termination /termination due to nonpayment /termination due to dissatisfaction of service.

Total balance accounts field 223e is a field related to the balance between total charging amount and total receipting amount. The total balance accounts field 223e is related to the nonpayment or payment in excess.

Receipt method field 223f is a field related to payment means including credit card, bank account, and similar means.

The creation data of the last month bill field 223g is a field related to the creation date of the last month bill.

Billing conclusion process 201 copies billing system 201 from a plurality of billing related databases terminated with billing. The copying of databases and operating billing will now be described.

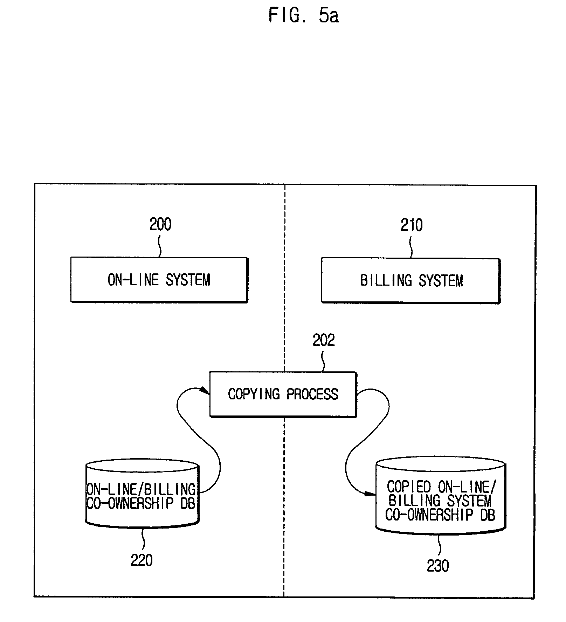

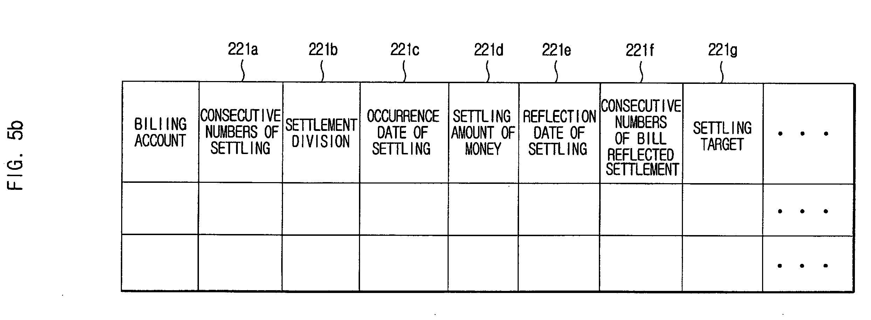

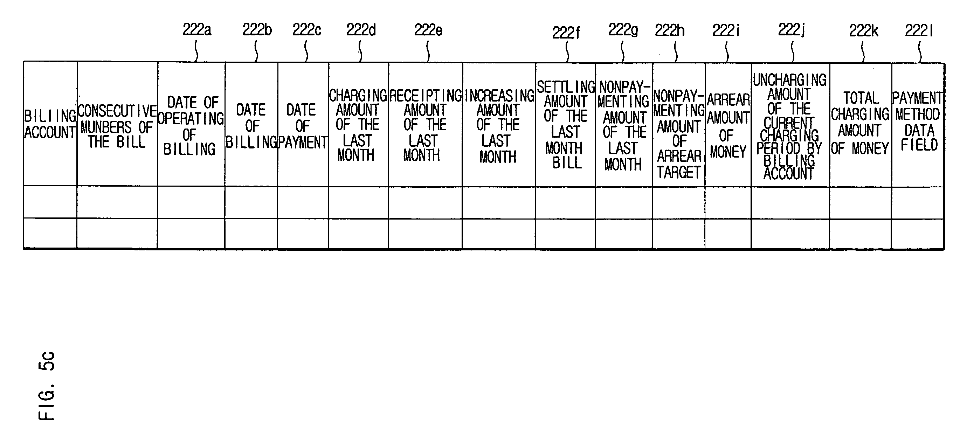

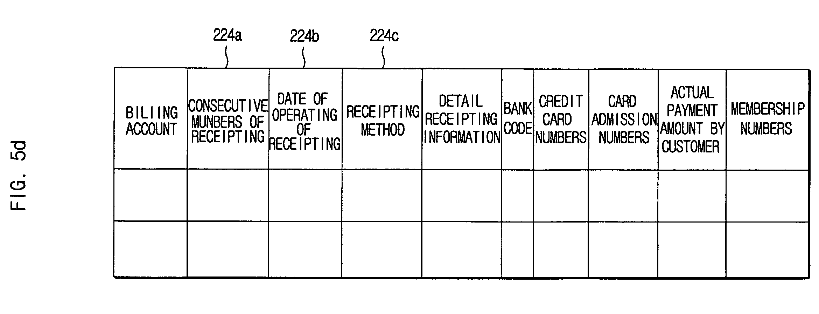

Fig. 5a illustrates copying of databases from an on-line/billing system co-ownership database to a billing system's database. Fig. 5b illustrates the configuration of a settling list database. Fig. 5c illustrates the configuration of a charging list database. Fig. 5d illustrates the configuration of a receipting list database.

In Fig. 5a, copying process 202 copies databases from an on-line/billing system co-ownership database 220 to a billing system's database 210. Copying process 202 may use (1) a copying method by table (database) by using the UNIX machine's import, export function, and (2) a copying method by disk box (storage) by using a data transmitting apparatus like the EMC's storage networking apparatus, or (3) any other suitable method. The first method is suitable for small amounts of data, but is slow for copy speed. Otherwise, the second method is suitable for large amount of data and is fast for copy speed. However, the second method is expensive.

Also, for the on-line/billing system co-ownership database 220, only billing operation fields may be copied. A system operator selects the billing operation fields in advance.

The settling list database 221, charging list database 222 and receipting list database 224 copied by the copying process 202 will now be described in detail.

Referring to Fig. 5b, settling list database 221 comprises a billing account field, a consecutive numbers settling field, a settlement division field, an occurrence data of settling field, a settling amount of money field, a reflection date of settling field, a field of consecutive numbers of bill that will be settled, and a settling target field. Settling list database 221 stores fee settlement lists of the billing accounts. Some consequence fields illustrated in Fig. 5b will now be described.

The consecutive numbers of settling is a field 221a related to a consecutive numbers of settling that may be unique identifier for identifying settling target in the same billing account and may be primary key.

Settlement division field 221b has a 'settlement' or 'cancellation of settlement' field and is primary key or foreign key.

The occurrence date of settling field is a field related to the occurrence date of 'settlement' or 'cancellation of settlement'.

The settling amount of money field 221c is a field related to a 'settling' or 'cancel of settling' amount of money.

The reflection date of settling field 221e is a field related to a 'settling' or 'cancel of settling' date.

The consecutive numbers of bill reflected settlement field 221f is a field related to consecutive numbers of bill reflected with 'settlement' or 'cancellation of settlement'.

The settling target field 221g is a field related to a target reflected with 'settlement' or 'cancellation of settlement'. The settling target may be a basic fee, a monthly fee, an entrance fee, the price of terminal or a fee of telephone call.

Referring to Fig. 5c, charging list database 222 comprises a billing account field, a consecutive numbers of bill field, a date of operating billing field, a date of billing field, a date of payment field, a charging amount of the last month field, a receipting amount of the last month field, an increasing amount of the last month field, a settling amount of the last month bill field, a nonpayment amount of the last month field, a nonpayment amount of arrear target field, an un-charging amount of the current charging period by billing account field, a total charging amount of money field and a payment method field. Some consequence fields illustrated in Fig. 5c will now be described.

The date of operating of billing field 222a is related to a date of operating of billing.

The date of billing field 222b is related to a submitting date of bill.

The date of payment field 222c is a field related to a closing day of payment for charging fee.

The charging amount of the last month field 222d is a field related to total charging amount of money for the last month. The charging amount of the last month has positive value or negative value.

The receipting amount of the last month field 222e is a field related to receipting amount of money until the date of charging.

The settling amount of the last month bill field 222f is a field related to charging amount occurred through on-line and to receipting amount through on-line.

The nonpayment amount of the last month field 222g is a field related to total nonpayment amount expired the closing day of payment of the last month. The nonpayment amount of the last month has positive value or negative value.

The nonpayment amount of arrear target field 222h is a field related to nonpayment amount imposed with additional charges out of nonpayment amount of the last month.

The arrears amount of money field 222i is a field related to arrears charges imposed on the nonpayment amount of arrear target.

The un-charging amount of the current charging period by billing account field 222j is a field related to charging amount accumulated between the date of billing and the date of submitting bill.

The total charging amount of money field 222k is a field related to total charging amount of money for the current month for the customers or the billing accounts.

The payment method data field 2221 is a field related to payment methods.

Referring to Fig. 5d, receipting list database 224 comprises a billing account field, a consecutive numbers of receipting field, a date of operating of receipting field, a receipting method field, a detail receipting information field, a bank code field, a credit card numbers field, a card admission numbers field, a actual payment amount by customer field, and a membership numbers field. Fields illustrated in Fig. 5d will now be described.

The consecutive numbers of receipting field 224a is a field related to a unique identifier for identifying receipting by billing accounts.

The date of operating of receipting field 224b is a field related to a date of customer's actual receipting for charging fee.

The receipting method field 224c is a field related to customer's receipting method for charging fee.

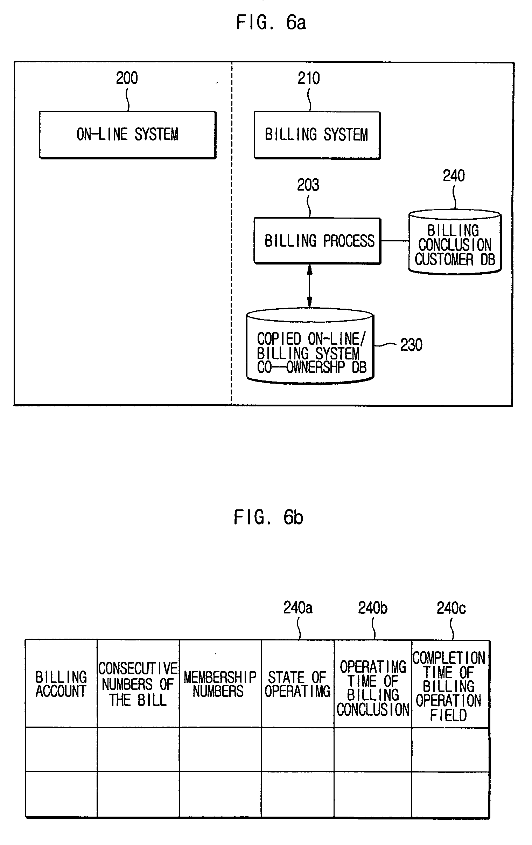

Fig. 6a is an illustration describing billing operations using the on-line/billing system co-ownership database terminated with billing. Fig. 6b is a block diagram illustrating the billing conclusion customer database.

Referring to Fig. 6a, billing system 210 operates billing by using the on-line/billing system co-ownership database 230 copied from the on-line system terminated with billing.

The copied on-line/billing system co-ownership database 230 decreases the consecutive numbers of the bill by the predetermined value in order to restore the consecutive numbers to its original state. Billing process 203 extracts specific data for the billing operation and recomposes tables. Also, billing process 203 stores the extracted data in particular order in order that a lot of data can be processed in 1 block of the SGA area in the UNIX machine. Also, billing process 203 may recompose or eliminate indexes for improvement of performance of the billing system.

The customers information and/or the billing accounts completed with billing may be stored in the billing conclusion customer database 240. Also, the state of operating field may be altered with 'completion of billing'.

Referring to Fig. 6b, billing conclusion customer database 240 comprises a billing account field, a consecutive numbers of bill field, a membership numbers field, a state of operating field, a operating time of billing conclusion field, and a completion time of billing operation field.

State of operating field 240a is a field related to whether or not the billing operation is completed. The state of operating comprises 'waiting for billing operation', 'billing operating' and 'completing of billing operation'.

Operating time of billing conclusion field 240b is a field related to an operating time of billing conclusion in on-line system. The operating time of billing conclusion field 240b may be a selective field, and may be used only for separately managing an altering time of databases as the time of billing conclusion in the on-line system 200.

Completion time of billing operation field 240c is a field related to a completion time of billing operation. The completion time of billing operation field 240c may be a selective field, and may be used for separately managing an altering time of database in the on-line system 200 and simplifying the operation of the database synchronizing process 205. Namely, the operating time of billing conclusion field 240b and the completion time of billing operation field 240c may be used for comparing the alteration times of the databases, in order that the comparing process in the database synchronizing process 205 is omitted.

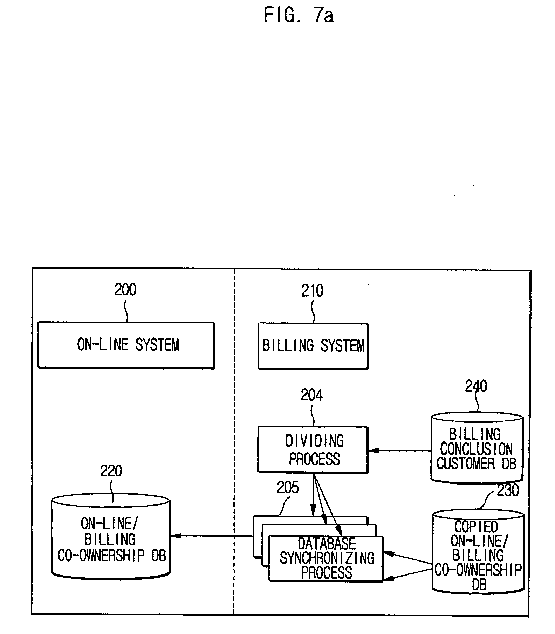

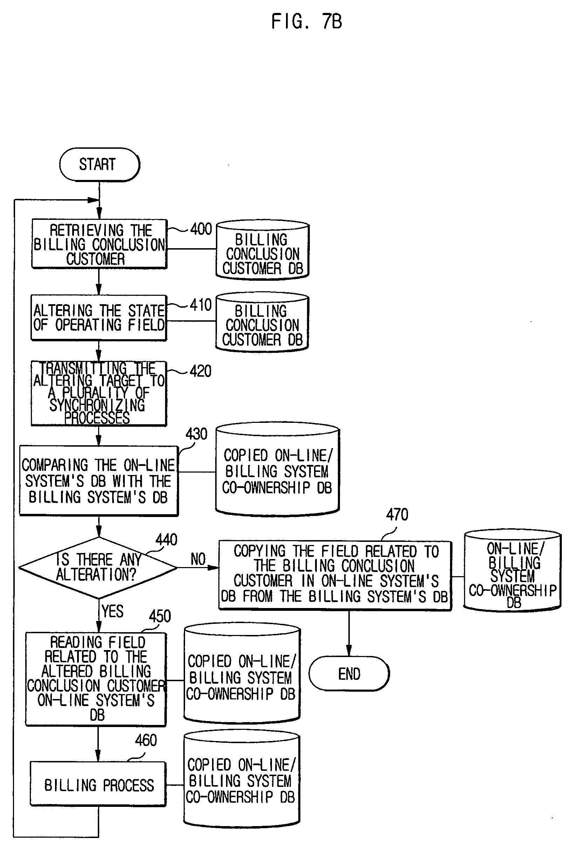

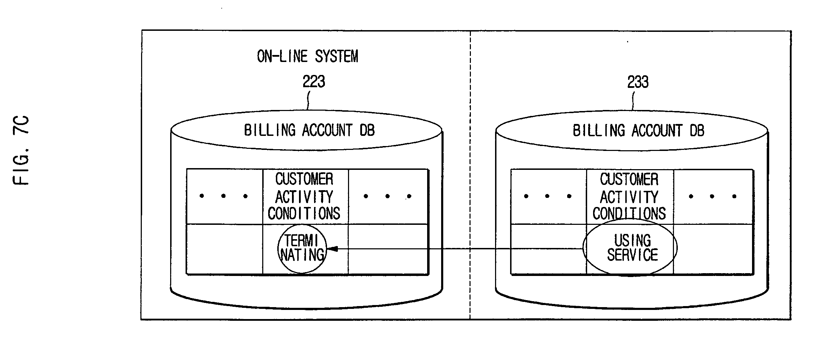

Fig. 7a illustrates transmitting customers' information and/or billing accounts completed with billing to the on-line/billing system co-ownership database. Fig. 7b illustrates the alteration of the on-line/billing system co-ownership database after operation billing conclusion and before completion of billing. Fig. 7c illustrates describing synchronization between the copied on-line/billing system co-ownership database and the on-line/billing system co-ownership database.

Referring to Fig. 7a, dividing process 204 retrieves the customers information or the billing accounts completed with billing from the billing conclusion customer database 240, and divides the customer list or the billing account list completed with billing into a plurality of database synchronizing processes 205. The plurality of database synchronizing processes 205 reads the billing data related to the information of the customers and the billing accounts from the copied on-line/billing system co-ownership database 230, by referring to the customer list or the billing account list, and transmits them to the on-line/billing system co-ownership database 220.

Referring to Fig. 7b, at step 400, dividing process 204 retrieves the customers' information or the billing accounts completed with billing from the billing conclusion customer database 240.

At step 410, the dividing process 204 alters the state of operating of the customers or the billing accounts completed with billing into 'operating'. Also, the dividing process 204 counts the number of the customers or the billing accounts altered by their state as 'operating', and decides the number of necessary database synchronizing processes 205. When the number of necessary database synchronizing processes 205 is decided, the necessary database synchronizing processes 205 are created in correspondence with the number.

If the number of created database synchronizing processes exceeds the number of operations, the exceeded database synchronizing processes are terminated, in order that system resources are allocated to the billing process. Also, the database synchronizing processes are terminated when they do not have any operation during the predetermined time.

At step 420, dividing process 204 divides the customer list or the billing account list that their state is 'operating' into the created plurality of database synchronizing processes 205. The quantity of the divided customer list or billing account list may be restricted to the number of one database synchronizing process's ability. Because the number of lists that the database synchronizing processes 205 operates during predetermined time is depended on each billing system's ability, the system operator may set up the predetermined value in advance.

At step 430, database synchronizing process 205 reads the data of the customers or the billing accounts from the copied on-line/billing system co-ownership database 230, compares the data with the billing data related to the customers or the billing accounts stored in the on-line/billing system co-ownership database 220. After copying the on-line/billing system co-ownership database 220 for billing, some fields of the on-line/billing system co-ownership database 220 are modified, deleted or created, if the on-line system 200 modifies the on-line/billing system co-ownership database 220. Referring to Fig. 7c, on-line system 200 modifies the customer activity conditions field of the billing account database 223 from 'using service' to 'terminating', after starting the billing.

Database synchronizing process 205 compares each field of the copied on-line/billing system co-ownership database 230 with each field of the on-line/billing system co-ownership database 220, by referring to the customers or the billing accounts. Namely, the database synchronizing process 205 compares the setting list database 221, the charging list database 222, the billing account database 223 and the receipting list database 224 of the on-line system 200 with the database synchronizing process 205 compares the setting list database 231, the charging list database 232, the billing account database 233 and the receipting list database 234 of the billing system 210 respectively, by referring to the equal billing accounts.

At step 440, if there is any alteration in the on-line/billing system co-ownership database 220, then step 450 is processed. If there is no alteration in the on-line/billing system co-ownership database 220, then step 470 is processed.

At step 450, billing system 210 reads the billing data of the altered billing conclusion customers from the on-line/billing system co-ownership database 220, stores the billing data in the copied on-line/billing system co-ownership database 230 and modifies the state of operating field of the billing conclusion customer database 240.

At step 460, billing system 210 operates the billing process for the altered customers or the altered billing accounts.

At step 470, billing system 210 transmits the customers billing data of the billing accounts that are not altered to the on-line system 200. The on-line system 200 stores the billing data in the on-line/billing system co-ownership database 220. If there is no alteration during the billing process, both the databases are equal, except for the billing data of the copied on-line/billing system co-ownership database 230 modified by the billing process. Accordingly, it is preferable that billing system 210 transmits just the billing data comprising the total charging amount to the on-line/billing system co-ownership database 220.

The present invention is intended to improve on-line processing efficiency and overcome limitations in billing process of companies that operate prior art combination systems of the on-line system and the billing system. The present invention facilitates a billing system with exclusively the necessary database for billing process during billing operation, and the on-line system reserves alterations of the customer information or the receipting activity on-line, and reprocesses the reserved alterations.

Although various embodiments of the present invention have been described it is not intended that the invention be limited to these embodiments. Modifications within the spirit of the invention will be apparent to those skilled in the art and are incorporated.

### Industrial Applicability

One advantage of the batch type billing method and system using dispersed processing in accordance with one preferred embodiment of the present invention is that the system (1) charges fees using altered address/name when the address/name are altered at the beginning of the month, and (2) applies some alterations such as agreement termination or drawback to the bill of the current month because the on-line system and the billing system have jointly a plurality of databases.

Another advantage of the batch typed billing method and system using dispersed processing in accordance with one preferred embodiment of the present invention is that (1) the billing system operates the billing process, no connection with the on-line system, (2) the billing performance is improved because there is no relation to the workloads on the on-line system, (3) the performance of the total system is improved because occupation competitions for system resources are removed, (4) the performance of the billing system is improved by reconstructing the tables of the database, because the billing system has exclusively a plurality of databases.

## Claims

1. A method for batch type billing in an on-line system and a billing system which has at least one joint database, wherein the on-line system for operating custom management and the billing system for billing charges are designed to disperse processing their own task, comprising the steps of:
converting a first database which the on-line system and the billing system access jointly, into the state after that time of submitting the current month bill;
copying a second database from the converted first database;
performing billing by using the second database on the basis of a billing account; and
synchronizing the second database with the first database.

2. A method as claimed in claim 1, wherein the step of converting comprises increasing the consecutive numbers of the bill in the first database by a predetermined value in order that alteration factors occurring after the time of beginning the billing are reflected on the next month bill.

3. A method as claimed in claim 1 or claim 2, wherein the step of synchronizing comprises of the steps of:
dividing the billing accounts into the number of simultaneously possible synchronization, corresponding to the number of billing accounts which have completed their billing process;
determining whether or not any alteration has occurred in the first database during the period of performing billing by comparing the first database with the second database on the basis of at least one billing account simultaneously; and
transmitting the data in the second database to the first database in correspondence with the determined result.

4. A method as claimed in any one of claims 1 to 3, wherein the first database comprises at least one billing related database.

5. A method as claimed in any one of claims 1 to 3, wherein the second database comprises at least one database accessed by only the billing system.

6. A method as claimed in any one of claims 1 to 3, wherein the billing account is identification numbers granted for at least one customer.

7. A batch type billing system having an on-line system and a billing system which have at least one database jointly, comprising:
billing conclusion means for converting a first database which the on-line system and the billing system can each access, into the state after the time of submitting the current month bill;
copying means for transmitting data stored in the first database to a second database;
billing means for performing billing using the second database on the basis of a billing account; and
at least one synchronizing means for synchronizing the second database with the first database.

8. A batch type billing system as claimed in claim 7, wherein the billing conclusion means increases the consecutive numbers of the bill in the first database by a predetermined value in order that alteration factors occurring after the time of beginning billing are reflected on the next month's bill.

9. A batch type billing system as claimed in claim 7, wherein at least one synchronizing means comprises:
means for dividing the billing accounts into the number of simultaneously possible synchronization, corresponding with the number of billing accounts which have completed their billing process;
means for determining whether or not any alteration has occurred in the first database during the period of performing billing by comparing the first database with the second database on the basis of at least one billing account simultaneously; and
means for transmitting the data in the second database to the first database corresponding with the determined results.

10. A batch type billing system as claimed in any one of claims 7 to 9, wherein the first database comprises at least one billing related database.

11. A batch type billing system as claimed in any one of claims 7 to 9, wherein the second database comprises at least one database accessed by only the billing system.

12. A batch type billing system as claimed in any one of claims 7 to 11, wherein the billing account comprises identification numbers granted for at least one customer.
